# EUROPÄISCHE PATENTSCHRIFT

(11) **EP 0 508 331 B1**
(45) Veröffentlichungstag und Bekanntmachung des Hinweises auf die Patenterteilung: **13.03.1996**
(21) Anmeldenummer: 92105848.3
(22) Anmeldetag: 04.04.1992
(51) Int. Cl.: F16L 33/04

(54) **Verbindungsteil, insbesondere für Schellen**
Locking element especially for clamps
Element de fermeture en particulier pour colliers

(30) Priorität: 09.04.1991 DE 4111359; 02.09.1991 DE 9110844 U
(43) Veröffentlichungstag der Anmeldung: 14.10.1992
(73) Patentinhaber: HYDAC FILTERTECHNIK GmbH, D-66273 Sulzbach (DE)
(72) Erfinder: Kasubke, Volker, W-6680 Neunkirchen (DE)
(74) Vertreter: Patentanwälte Bartels, Held und Partner

(56) Entgegenhaltungen:
- EP-A- 0 286 561
- DE-U- 6 931 027
- FR-A- 2 578 593
- US-A- 1 187 430
- US-A- 2 845 681
- US-A- 2 895 748

## Beschreibung

Die Erfindung betrifft ein Verbindungsteil mit den Merkmalen des Oberbegriffs des Anspruches 1.

Im Handel erhältliche, bekannte Verbindungsteile betreffen Schellen, mittels denen sich in ihnen aufgenommene Rohre festlegen lassen. Bei diesen bekannten Verbindungsteilen durchgreift ein Schraubenbolzen zwei mit Ausnehmungen in Form von Bohrungen versehene Zapfen, die von einem Schellenband umschlungen sind. Sofern das Rohr sich nicht seitlich in die Schelle einführen läßt, ist der Schraubenbolzen aus den Ausnehmungen zu entfernen und das elastische Schellenband wird so lange auseinandergezogen, bis das Rohr in die Öffnung zwischen den beiden einander gegenüberliegenden Zapfen hindurchpaßt, um anschließend in der Schelle von dem Schellenband umschlossen aufgenommen zu sein. Zum Schließen der Schelle wird dann der Schraubenbolzen durch die Ausnehmungen in den Zapfen wieder hindurchgesteckt und mit geeignetem Werkzeug so lange angezogen, bis das Rohr sicher von der Schelle umschlossen ist. Bei der Aufnahme des Rohres kann der Schraubenbolzen in der Ausnehmung einer der beiden Zapfen verbleiben und ist dort für einen entsprechenden Längenausgleich der Schelle in Abhängigkeit von dem Durchmesserbereich des aufzunehmenden Rohres mittels dem zugeordneten Zapfen schwenkbar angeordnet. Die Längsverstellung ist mittels einer auf den Schraubenbolzen aufschraubbaren Gewindemutter erreicht. Das bekannte Verbindungsteil läßt sich mithin nur vollständig öffnen, wenn die Gewindemutter entfernt ist und wenn der Schraubenbolzen zumindest aus der Bohrung mit seinem freien Ende herausgeführt ist, so daß das Öffnen und Schließen erschwert ist und viel Zeit benötigt.

Aus der US-PS 4 445 255 ist ein Verbindungsteil zum Verbinden zweier Enden bekannt, , das im Bereich eines Endes teilweise einen Zapfen umschließt und das ein längsverstellbares, schwenkbares Eingreifteil aufweist, das in die eine Ausnehmung bildende U-förmige Nut eines Schenkelstückes eingreift, das am anderen Ende des Verbindungsteiles und mit diesem fest verbunden angeordnet ist. Das Eingreifteil in Form eines Schraubenbolzens läßt sich mittels einer hülsenartigen Mutter zum Schließen des Verschlußteiles in dem Schenkelstück festlegen. Beim Anziehen der Mutter sowie beim Auftreten von Vibrationen am bekannten Verschlußteil ist nicht auszuschließen, daß das Verschlußteil sich unfreiwillig öffnet und die herzustellende Verbindung zwischen den beiden Enden des Verbindungsteiles sich löst und damit das aufzunehmende Teil freigegeben wird.

Durch die DE-PS 35 22 497 sowie durch die DE-DS 33 46 423 ist ein Verbindungsteil bekannt, bei dem die beiden Enden stegartig und im wesentlichen rechtwinklig ins Freie abstehen. Beim Festlegen des Verschlußteiles, insbesondere beim Aufbringen hoher Schließkräfte, kann es zum Abknicken der Stege und damit zu einem unfreiwilligen Lösen des Verbindungsteiles kommen. Zwar weist das Verschlußteil der DE-OS 33 46 423 entgegen dem Verschlußteil gemäß der DE-PS 35 22 497 bereits ein schwenkbares Eingreifteil in Form eines Schraubenbolzens auf, was eine schnelle Lösbarkeit der Verbindung gewährleistet; der hierzu entwickelte Schwenkmechanismus, der einen der beiden Stege mit einbezieht, ist aber kompliziert im Aufbau und damit teuer in der Herstellung.

Durch die FR-PS 2 519 405 ist ein Verbindungsteil bekannt, dessen Enden unter Bildung von Winkelstücken umgeschlagen und mit dem übrigen Verbindungsteil mittels einer Heftung verbunden sind. Die durch das Umschlagen gebildeten Winkelstücke werden von einem längsverstellbaren Eingreifteil in Form eines Schraubenbolzens durchgriffen. Um das Innere des Verbindungsteiles freizugeben, ist das Eingreifteil vollständig zu lösen, was zeitintensiv ist. Ferner kommt es bei diesem Verschlußteil ebenso wie bei den Verschlußteilen nach den beiden deutschen Dokumenten aufgrund schräg und nachgiebig angeordneter Stegteile an den Enden und/oder durch die relative Unbeweglichkeit des Schraubenbolzens zumindest zu Beginn des Schließvorganges nur zu einer unvollständigen Anlage von Schraubenkopf und/oder Schraubenmutter mit den Enden des Verbindungsteiles, was zu einer ungünstigen Krafteinleitung führt.

Durch die EP-A-0 286 561 ist ein gattungsgleiches Verbindungsteil bekannt, bei dem beide Zapfen hohlzylinderartig ausgebildet sind, wobei der Zapfen, der für die Verrastung mit dem Schraubenkopf des Schraubenbolzens vorgesehen ist, einen durchgehenden Längsschlitz aufweist. Das Rastteil in diesem hülsenartigen Zapfen besteht aus einer gegenüber der Nut vergrößerten, kreisförmigen Ausnehmung, in die eine hierfür vorgesehene, im Durchmesser zylindrische Verbreiterung des Schraubenbolzens oder der ganze Schraubenkorpf eingreift . Im gezeigten Ausführungsbeispiel, nach Einrasten dieser Verbreiterung des Schraubenbolzens und Anziehen desselben wird durch die entstehende Spannung im Schellenband die Verbreiterung des Schraubenbolzens von der von Rastteil und Nut gebildeten Hinterschneidung innerhalb des Zapfens gehalten, wobei eine Stützscheibe, die bei der bekannten Lösung zwischen dem Sechskantkopf und der Verbreiterung angeordnet ist, außerhalb des Zapfens unter Anlage mit ihm die Abstützung übernimmt. Mithin muß für die Funktion der bekannten Lösung der Schraubenkopf des Schraubenbolzens mit seiner Stützscheibe zwingend außerhalb des zugehörigen Zapfens mit dem Rastteil angeordnet sein, mit der Folge, daß in diesem Bereich die bekannte Schelle groß aufbaut, was insbesondere bei beengten Einbauverhältnissen für die Montage nachteilig ist. Auch kommt es bei großen Haltekräften zu Verformungen des Zapfens, insbesondere im Bereich des Rastteiles, so daß ein Versagen nicht auszuschließen ist.

Ausgehend von diesem Stand der Technik liegt der Erfindung die Aufgabe zugrunde, ein demgegenüber verbessertes Verbindungsteil zu schaffen, das kostengünstig herstellbar ist und das eine günstige Krafteinleitung bei Aufbringen hoher Haltekräfte versagensfrei ermöglicht. Eine dahingehende Aufgabe löst ein Verbindungsteil mit den Merkmalen des Anspruches 1.

Dadurch, daß der mit dem Rastteil versehene Zapfen massiv ausgebildet ist und daß das Rastteil aufgrund der kreisförmigen Vertiefung eine eben verlaufende Anlagefläche ausbildet, die in unmittelbare Anlage mit der ihr zugewandten Fläche der Unterseite des Schraubenkopfes für den Rastvorgang bringbar ist, greift der Schraubenkopf des Schraubengewindes unmittelbar in den zugeordneten Zapfen ein, was Einbauraum spart und das Aufbringen hoher Haltekräfte erlaubt, da diese über die eben verlaufende Anlagefläche innerhalb des Rastteiles in den massiven Zapfen versagensfrei einleitbar sind.

Bevorzugte Ausgestaltungen des Verbindungsteiles sind Gegenstand der Unteransprüche. Das erfindungsgemäße Verbindungsteil eignet sich in besonders vorteilhafter Weise zum Öffnen und Schließen von Schellen, wie sie beispielsweise in der nicht vorveröffentlichten DE-OS 41 11 359.4 der Anmelderin dargestellt sind.

Im folgenden wird das erfindungsgemäße Verbindungsteil anhand der Zeichnung näher erläutert.

Es zeigen:
- Fig.1: eine Seitenansicht des in einer Schelle eingebauten Verschlußteiles;
- Fig.2: eine perspektivische Darstellung des Verschlußteiles mit Schelle gemäß Fig.1, wobei der Zapfen mit der Nut und dem Rastteil separat dargestellt ist.

Das erfindungsgemäße Verbindungsteil dient zum Öffnen und Verschließen einer Gelenkband-Konsolenschelle gemäß der DE 41 11 359.4, die dort im einzelnen beschrieben ist, so daß auf deren Aufbau an dieser Stelle nicht näher eingegangen wird. Diese Schelle weist als Verbindungsteil 10 im Sinne der Erfindung ein Schellenband auf, das im wesentlichen kreisförmig ausgebildet ist und einen Aufnahmeraum 12 begrenzt, in dem ein Rohr (nicht dargestellt) in seiner Lage festlegbar ist. Das Schellenband 10 weist zwei einander benachbart gegenüberliegende Enden 14 und 16 auf, die jeweils teilweise einen Zapfen. 18 bzw. 20 umschließen und die die Zapfen 18,20 vorzugsweise axial unverschiebbar in ihrer Lage im Schellenband 10 halten. Das um die beiden Zapfen 18,20 herumgeschlungene Schellenband 10 ist unter Bildung der Augen für die aufzunehmenden Zapfen 18,20 mittels einer Punktschweißung mit dem übrigen Schellenband 10 verbunden.

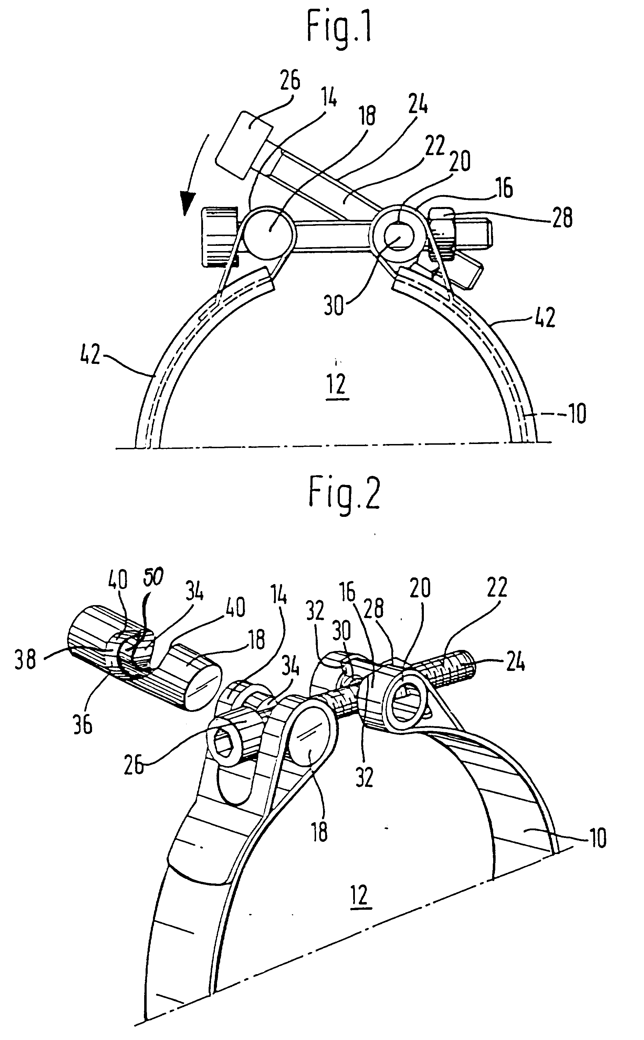

Als Eingreifteil 22 ist ein Schraubenbolzen vorgesehen, der an seinem einen Ende ein Gewinde 24 und an seinem anderen Ende einen Schraubenkopf 26 aufweist, der für den Eingriff eines Werkzeuges eine Innensechskant-Ausnehmung hat. Auf das Gewinde 24 des Schraubenbolzens 22 ist eine Gewindemutter 28 aufschraubbar. Mittels dieser Gewindemutter 28 läßt sich das Eingreifteil 22 längsverstellen. Im Bereich der beiden Zapfen 18 und 20 ist das Schellenband 10 längsgeteilt und der Zapfen 20, der als Hohlzylinder ausgebildet ist, weist eine durchgehende Ausnehmung 30 auf, die oval ausgebildet ist und die von dem Schraubenbolzen 22 durchgriffen ist. Der Zapfen 20 weist im Bereich seiner Ausnehmung 30 Vorsprünge (nicht dargestellt) auf, die mit einer Verbreiterung 32 des Schellenbandes derart zusammenwirken, daß der Zapfen 20 um etwa 180° schwenkbar in dem umschlungenen Teil des Schellenbandes 10 von diesem gehalten ist. Dank dieser Verschwenkbarkeit läßt sich der Zapfen 20, wie dies insbesondere die Fig.1 zeigt, begrenzt verschwenken und nach Entfernung des Schraubenbolzens 22 auch aus dem Schellenband 10 von Hand herausnehmen.

Der in Fig.2 als separates Teil dargestellte zweite Zapfen 18 ist massiv ausgebildet und weist quer zu seiner Längsrichtung eine durchgehende Nut 34 auf, die in einen Rastteil 36 für die Verrastung mit dem Eingreifteil 22 mündet. Die beiden einander gegenüberliegenden Seitenwände der Nut 34 sind eben ausgebildet und münden in einen halbkreisförmigen Nutengrund, dessen Durchmesser dem Durchmesser des Schraubenbolzens 22 angepaßt ist. Das Rastteil 36 hingegen ist aus einer kreisförmigen Vertiefung 38 im Zapfen 18 gebildet, deren Durchmesser dem Durchmesser des Schraubenkopfes 26 entspricht, wobei die Vertiefung 38 mit der Nut 34 eine Hinterschneidung 40 bildet, in die der Schraubenkopf 26 einrastbar ist. Der zylindrische Zapfen 18 hat in dem Schellenband 10 eine Lage, daß die Nut 34 mit ihrer quer zur Längsrichtung des Zapfens 18 verlaufenden Öffnung dem Schraubenbolzen 22 zugewandt ist. Das Rastteil 36 bildet mithin eine eben verlaufende Anlagefläche aus, die in Anlage mit der ihr zugewandten Fläche der Unterseite des Schraubenkopfes 26 für den Rastvorgang bringbar ist.

Zum Öffnen des Verschlusses der Schelle wird mittels eines Innensechskant-Schlüssels der Schraubenbolzen 22 aufgeschraubt, wobei die Gewindemutter 28 als Konterung mit zwei ihrer Flächen, die für den Angriff eines Werkzeuges vorgesehen sind, in Anlage mit dem umschlungenen Teil des Schellenbandes 10 verbleibt. Der Schraubenbolzen 22 wird so lange aufgeschraubt, bis der Schraubenkopf 26 außer Eingriff mit der Hinterschneidung 40 des Rastteiles 36 gerät. Dann läßt sich der Schraubenbolzen 22 entgegen der in Fig.1 dargestellten Pfeilrichtung nach oben mittels des Zapfens 20 verschwenken. Zur vollständigen Freigabe der Öffnung zwischen den beiden Zapfen 18 und 20 läßt sich der Schraubenbolzen 22 vollends durch die Ausnehmung 30 des Zapfens 20 hindurchschieben, bis der Schraubenkopf 26 in Anlage mit dem umgelenkten Teil des Schellenbandes 10 kommt. Das elastische Schellenband läßt sich dann weiter aufweiten für die Aufnahme oder das Entfernen eines bereits in dem Aufnahmeraum 12 befindlichen Rohres (nicht dargestellt). Zum Schließen des Verschlußteiles und damit der Schelle wird der Schraubenbolzen 22 wieder in seine in der Fig.1 oben dargestellte Lage zurückgebracht, wobei die beiden Schellenenden 14,16 aufeinander zugebogen werden. Nach dem anschließenden Verschwenken des Schraubenbolzens 22 in Richtung des Pfeiles in Fig.1 kommt der Schraubenkopf 26 in Anlage mit den Zapfen 18. Durch die Eigenspannung des Schellenbandes 10, das sich öffnen will, wird der Schraubenkopf 26 in das Rastteil 36 hineingezogen und der Schraubenkopf 26 kommt in Anlage mit der Hinterschneidung 40. Anschließend wird über den Innensechskant im Schraubenkopf 26 der Schraubenbolzen 22 angezogen, wobei die Gewindemutter 28 mit zwei ihrer Werkzeugangriffsflächen in Anlage mit dem Schellenband 10 ist und damit als Kontermutter dient. Der Schraubenbolzen 22 wird dann so lange angezogen, bis ein etwaig in dem Aufnahmeraum 12 befindliches Rohr (nicht dargestellt) in der Schelle festgelegt ist. Bei dem angesprochenen Spannvorgang beim Schließen des erfindungsgemäßen Verschlußteiles wird der kraftschlüssig gehaltene Zapfen 18 bedingt durch die formschlüssige Verbindung von Vertiefung 38 mit Schraubenkopf 26 in radialer Richtung gesehen derart ausgerichtet, daß die Längsachse der Nut 34 koaxial zu der Längsachse des Schraubenbolzens 22 verläuft, sofern dieser vollständig in die Nut 34 eingeschwenkt ist. Durch den kraftschlüssig gehaltenen Zapfen 18 ist dieser derart in dem umschlungenen Teil des Schellenbandes 10 gehalten, daß erst beim eigentlichen Spannvorgang mittels des Eingreifteiles 22 sich der Zapfen 18 radial und zwangsläufig derart bewegt, daß es zu der für die Krafteinleitung in das Verbindungsteil 10 günstigen koaxialen Anordnung von Nut 34 mit dem Eingreifteil 22 in Form des Schraubenbolzens kommt.

Zum Schutz des aufzunehmenden Rohres kann die Schelle, wie insbesondere Fig.1 zeigt, mit im Querschnitt U-förmig ausgebildeten Profilgummistücken 42 versehen sein. Sofern die einander zugekehrten Enden der beiden Profilgummistücke 42 den unteren Teil der beiden Zapfen 18,20 (nicht dargestellt) umfassen, können diese somit in ihrer axialen Lage innerhalb des umschlungenen Bereiches des Schellenbandes 10 gehalten werden. Das erfindungsgemäße Verschlußteil braucht nicht auf die Anwendung für Schellen beschränkt zu sein. So ließen sich beispielsweise Kettenglieder oder ebene, bandförmige, gliedartige Teile ebenso miteinander verbinden.

## Patentansprüche

1. Verbindungsteil, das im Bereich seiner beiden Enden (14,16) zumindest teilweise jeweils einen Zapfen (18,20) umschließt, und mit einem Verschlußteil zwischen den beiden Enden (14,16) mit einem längsverstellbaren, schwenkbaren Eingreifteil (22), das aus einem Schraubenbolzen gebildet ist und das in Ausnehmungen (30,34) der beiden Zapfen (18,20) eingreift, wobei die Ausnehmung eines Zapfens (18) als Nut (34) ausgebildet ist, der ein Rastteil (36) für die Verrastung mit dem Schraubenkopf (26) des Schraubenbolzens aufweist, der in die Nut (34) einschwenkbar ist, die mit dem Rastteil (36) eine Hinterschneidung (40) bildet, wobei das Rastteil (36) mit seiner Hinterschneidung (40) aus einer kreisförmigen Vertiefung (38) im Zapfen (18) gebildet sind, deren Durchmesser dem Durchmesser des Schraubenkopfes (26) entspricht dadurch gekennzeichnet, daß der mit dem Rastteil (36) versehene Zapfen (18) massiv ausgebildet ist, und daß das Rastteil (36) eine eben verlaufende Anlagefläche (50) ausbildet, die in Anlage mit der ihr zugewandten Fläche der Unterseite des Schraubenkopfes (26) für den Rastvorgang bringbar ist.

2. Verbindungsteil nach Anspruch 1, dadurch gekennzeichnet, daß der Schraubenbolzen (22) ein Gewinde (24) aufweist, das durch mindestens einen der Zapfen (20) hindurchsteckbar ist und auf dem eine Gewindemutter (28) aufschraubbar ist, die in Anlage mit einem der Verbindungsteile (10) bringbar ist.

3. Verbindungsteil nach Anspruch 1 oder 2, dadurch gekennzeichnet, daß der das Rastteil (36) aufweisende Zapfen (18) kraftschlüssig und der andere Zapfen (20) schwenkbar mit dem jeweiligen Verbindungsteil (10) verbunden ist.

4. Verbindungsteil nach einem der Ansprüche 1 bis 3, dadurch gekennzeichnet, daß das jeweilige Verbindungsteil (10)aus einem Band oder einer Kette oder aus einem Teil hiervon gebildet ist.

## Claims

1. Connecting element, which in the region of its two ends (14, 16) surrounds at least partly respectively one pin (18, 20), and with a closure element between the two ends (14, 16) with a longitudinally adjustable, tilting engagement part (22), which is formed by a screw bolt and which engages in recesses (30, 34) of the two pins (18, 20), the recess of one pin (18) being constructed as a groove (34), which comprises a locking part (36) for locking with the screw head (26) of the screw bolt, which can be pivoted into the groove (34), which with the locking part (36) forms a back taper (40), the locking part (36) with its back taper (40) being formed from a circular recess (38) in the pin (18), whereof the diameter corresponds to the diameter of the screw head (26), characterized in that the pin (18) provided with the locking part (36) has a solid construction and that the locking part (36) forms an abutment surface (5c) extending in a flat manner, which can be brought into abutment with the facing surface of the underside of the screw head (26) for the locking operation.

2. Connecting element according to Claim 1, characterized in that the screw bolt (22) comprises a screw thread (24), which can be inserted through at least one of the pins (20) and on which a threaded nut (28) can be screwed, which can be brought into abutment with one of the connecting elements (10).

3. Connecting element according to Claim 1 or 2, characterized in that the pin (18) comprising the locking part (36) is frictionally connected and the other pin (20) is tiltably connected to the respective connecting element (10).

4. Connecting element according to one of Claims 1 to 3, characterized in that the respective connecting element (10) is formed from a band or a chain or a part thereof.

## Revendications

1. Elément d'assemblage enfermant, dans la plage de ses deux extrémités (14, 16), au moins partiellement, un tourillon (18, 20) et formant, avec un élément de fermeture monté entre les deux extrémités (14, 16) comprenant un élément d'insertion (22) pivotant réglable en longueur en forme de boulon fileté introduit dans les alésages (30, 34) des deux tourillons, l'alésage de l'un des deux tourillons étant réalisé sous la forme d'une rainure (34) présentant un cliquet (36) pour fixer la tête (26) du boulon fileté pivotant par encliquetage dans la rainure constituant une contre-dépouille (40) avec le cliquet, le tourillon (18) muni du cliquet (36) étant massif et ledit cliquet étant réalisé, avec sa contre-dépouille, par un creux circulaire (38) aménagé dans ledit tourillon, le diamètre dudit creux correspondant au diamètre de la tête (26) du boulon fileté, **caractérisé en ce que** le cliquet (36) forme une surface d'appui plane (50) pouvant être mise en appui contre la face inférieure juxtaposée de la tête (26) du boulon fileté pour réaliser l'encliquetage.

2. Elément d'assemblage selon la revendication 1, caractérisé en ce que le boulon fileté (22) comprend un filetage (24) pouvant être introduit à travers au moins un tourillon (20) et sur lequel peut être vissé un écrou (28), ce dernier pouvant être appuyé sur l'un des éléments d'assemblage (10).

3. Elément d'assemblage selon l'une quelconque des revendications 1 ou 2, caractérisé en ce que le tourillon (18) comprenant le cliquet (36) est relié par adhérence à l'élément d'assemblage (10), tandis que l'autre tourillon (20), peut pivoter par rapport à ce dernier.

4. Elément d'assemblage selon l'une quelconque des revendications 1 à 3, caractérisé en ce que l'élément d'assemblage (10) correspondant est réalisé sous la forme d'un ruban ou d'une chaîne ou d'un élément de ces derniers.
